# EUROPEAN PATENT APPLICATION

(11) **EP 0 786 382 A1**
(43) Date of publication of application: **30.07.1997**
(21) Application number: 97300393.2
(22) Date of filing: 22.01.1997
(51) Int. Cl.: B60R 21/16, B60R 21/22

(54) **Passenger-side airbag**

(30) Priority: 26.01.1996 US 592063
(71) Applicant: MORTON INTERNATIONAL, INC., Chicago, Illinois 60606 (US)
(72) Inventor: Lewis, Trudy C., Roy, Utah 84067 (US)
(74) Representative: Bankes, Stephen Charles Digby

(57) **Abstract**

A cushion for a passenger-side automotive airbag is designed to minimize waste fabric and labour, to render it more readily amenable to automated construction techniques, and to reduce stress concentrations during inflation and impact. These objectives are accomplished by the use of a rectangular main panel (12) with the airbag mouth (18) in the body of the main panel. Each end panel (14) is highly rounded with a peripheral boundary in the form of a closed curve which includes no curve segment having a radius less than a preselected minimum length such as 150 mm.

## Description

This invention relates to the field of automotive airbag design. More particularly, it relates to a passenger-side airbag cushion having an improved design which minimizes fabric waste, assembly time, labor costs, and failure modes.

One type of a conventional passenger-side airbag cushion comprises a main panel and two end panels. The main panel is in the form of an elongated rectangle terminating in narrowed ends which may be somewhat bell-shaped. The two ends of the main panel form opposite sides of the airbag mouth. The remaining sides of the airbag mouth are formed by a portion of each of the end panels. The prior art end panels typically include relatively intricate peripheral contours including relatively short radii. The panels making up the airbag are typically laid out on a bolt of fabric having a width of 63 inches (160 cm). Due to the asymmetry of the airbag panels, each cushion typically requires 2.062 yards (1.9 m) of fabric, resulting in a substantial waste of fabric.

In another type of prior art airbag cushion, each end of the main panel defines a mouth opening. The two mouth openings are juxtaposed and sewn together to form a double thickness of fabric at the mouth. If an internal tether is used in this type of airbag, it is common practice to allow an additional 3 inches (7.8 cm) of fabric at the center of the panel. This region is doubled up and sewn to form a two ply anchor extending across the main panel to which one end of the tether is attached, the other end being attached adjacent the mouth.

It will be apparent from the foregoing description that passenger-side airbag cushions in accordance with the prior art are labor intensive, wasteful of fabric, and their production is difficult to automate. In addition to these problems, the relatively short radii of the curves and angles on the periphery of the panels creates high stress areas which are subject to failure upon inflation and impact.

Accordingly, it is a primary object of the present invention to provide a passenger-side automotive airbag cushion which is less wasteful of fabric, which is less labor intensive, whose production can be easily automated, and which is less subject to failure. The manner in which these objects is achieved will be apparent from the following description and appended claims.

The objects of this invention are achieved by a passenger-side airbag cushion constructed of a main panel and two end panels. The main panel is essentially rectangular, the airbag mouth being formed in the body of the rectangle. The end panels are highly rounded with no short radii and the bodies of the end panels are slightly curved. By employing these configurations, the panels are more easily nested onto the bolt of fabric and waste is minimized.
FIG. **1** illustrates a bolt of cloth with the panel patterns for three airbag cushions thereon;
FIG. **2** illustrates the main panel of an airbag cushion in accordance with this invention;
FIG. **3** is an end view of an inflated airbag cushion constructed in accordance with the present invention;
FIG. **4** is a left elevation of the cushion of FIG. 3; and
FIG. **5** is a right elevational view of the cushion of FIG. **3**.

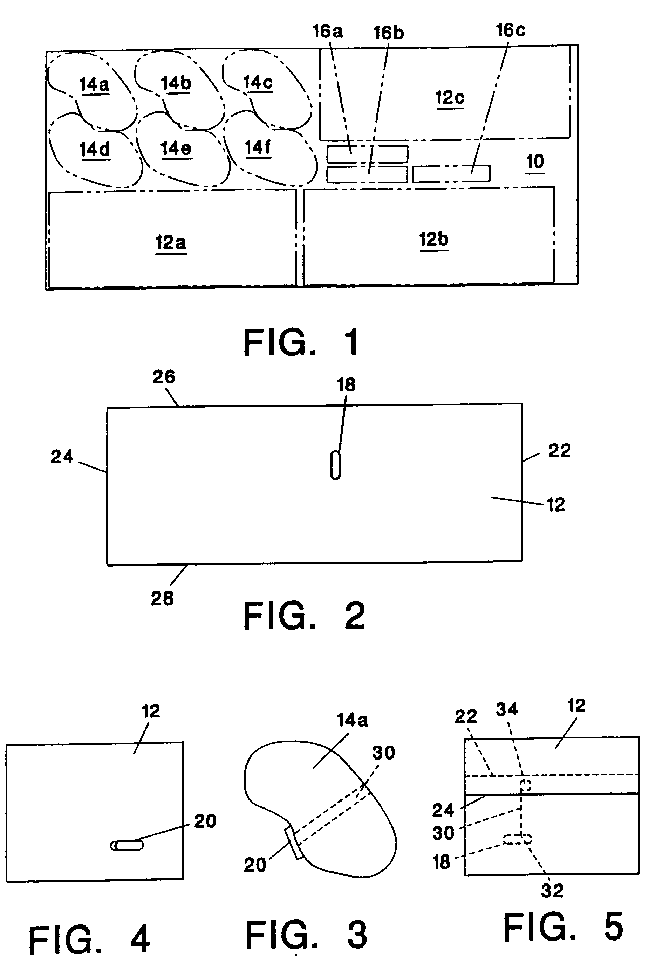

FIG. **1** illustrates a portion of a bolt of fabric **10** upon which are nested the patterns for three passenger-side airbag cushions. These include three main panels **12a-c** and six end panels **14a-f.** Also included are three patterns **16a-c** for rod pockets. Such pockets are sewn to the mouth of the airbag cushion and house a rod or tube which connects the cushion to the airbag module. These are well-known in the art and will not be further described.

It will be noted that the end panels **14** are highly rounded, having a peripheral boundary in the form of a closed curve, with no short radii. Preferably, there is no curve included within the peripheral boundary of any end panel with a radius which measures less than 6 inches (150mm). Furthermore, the end panels are slightly curved, having a convex side and a concave side, so that they nest well as illustrated in FIG. **1** and leave a minimum of waste fabric. The main panels **12a-c** are perfectly rectangular and similarly leave a minimum of waste fabric.

Another feature of the present invention is that the mouth of the airbag cushion, which receives the inflating gas, is formed in the body of the main panel, rather than by its ends. FIG. **2** illustrates a main panel **12** defining a mouth **18.** As illustrated in FIG. **2**, the mouth **18** is a substantially oval opening which may be located symmetrically or asymmetrically within the panel **10**. One advantage to such a construction is that a snout can be readily attached to the flattened panel by automated sewing or other techniques. FIGS. **3-5** illustrate an airbag cushion, assembled from panels in accordance with this invention, in its inflated condition. These views illustrate the main panel **12** having a mouth **18** to which a snout **20** has been secured. The ends **22, 24** of the main panel **12** are overlapped and sewn together as illustrated in FIG. **5**, thereby forming a two-ply thickness across the width of the main panel. End panels **14a** and **14b** (not shown) are sewn by their peripheral boundaries to the sides **26, 28** of the main panel. An internal tether **30** has one end **32** sewn to the edge of the mouth **18** and the other end **34** is sewn to the two-ply region of the main panel **10** between the main panel ends **22, 24** as shown in FIG. **5**.

In one actual embodiment of this invention, the material requirements, with the patterns laid out as illustrated in FIG. **1**, amounted to only 1.33 yards (1.23 m) for each airbag cushion. This contrasts with 2.062 yards (1.9 m) per cushion, employing the conventional prior art approach. Assembly time is reduced because the more rounded end panels are easier to sew and the sewing of the snout and the main panel seam is easier to automate. Labor costs are reduced and the large radii forming the peripheral boundaries of the end panels distribute the load more evenly to all areas of the cushion, thereby minimizing the potential for failure.

## Claims

1. A passenger-side fabric automotive airbag cushion particularly adapted to minimize fabric usage which comprises:
a substantially rectangular main panel (12) having first and second sides (26, 28) and first and second ends (22, 24), said first and second ends overlapping and being connected together along a seam; and
first and second substantially identical end panels (14), each of said end panels having a peripheral boundary secured to a different one of the first and second sides of said main panel, said peripheral boundary being in the form of a closed curve having substantially no radius less than 150 mm.

2. An airbag according to claim 1 wherein said main panel (12) defines a mouth (18) therein for receiving inflating gas.

3. An airbag according to claim 2 including an internal tether (30) having a first end (34) connected to said seam and a second end (32) connected to said mouth (18).

4. An airbag according to any preceding claim wherein said closed curve includes a generally convex side and a generally concave side joined by rounded ends.
